# EUROPÄISCHE PATENTANMELDUNG

(11) **EP 2 773 081 A1**
(43) Veröffentlichungstag der Anmeldung: **03.09.2014**
(21) Anmeldenummer: 13157228.1
(22) Anmeldetag: 28.02.2013
(51) Int. Cl.: H04L 29/08, H04L 29/06

(54) **Kommunikationsgerät für ein industrielles Kommunikationsnetz und ein Verfahren zur Bereitstellung von Daten, insbesondere Dateien, in einem industriellen Kommunikationsnetz mittels File Transfer Protocol**

(71) Anmelder: Siemens Aktiengesellschaft, 80333 München (DE)
(72) Erfinder: Gerlach, Hendrik, 91058 Erlangen (DE); Köbinger, Franz, 90475 Nürnberg (DE)

(57) **Zusammenfassung**

Zur Bereitstellung von Daten in einem industriellen Kommunikationsnetz werden durch eine Überwachungseinheit Steuerungsbefehle ausgelesen werden, die entsprechend File Transfer Protocol formatiert und von einer ersten Datenverarbeitungseinrichtung an eine zweite Datenverarbeitungseinrichtung gerichtet sind. Durch eine Steuerungseinheit werden ausgelesene Steuerungsbefehle, die für einen aktiven Dateiübertragungsmodus vorgesehen sind, durch Steuerungsbefehle für einen passiven Dateiübertragungsmodus ersetzt. Eine durch die Steuerungseinheit gesteuerte Server-Rechnereinheit baut eine Datenverbindung in einem aktiven Dateiübertragungsmodus entsprechend File Transfer Protocol zur ersten Datenverarbeitungseinrichtung auf. Eine durch die Steuerungseinheit gesteuerte Client-Rechnereinheit baut eine Datenverbindung in einem passiven Dateiübertragungsmodus entsprechend File Transfer Protocol zur zweiten Datenverarbeitungseinrichtung auf. Über eine durch die Steuerungseinheit gesteuerte Datenverbindung zwischen der Server-Rechnereinheit und der Client-Rechnereinheit werden Daten von der zweiten Datenverarbeitungseinrichtung an die erste Datenverarbeitungseinrichtung übertragen.

## Beschreibung

In einem Kommunikationsnetz können Dateien beispielsweise mittels File Transfer Protocol (FTP) bereitgestellt werden. Das File Transfer Protocol ist zur Übertragung von Dateien über IP-basierte Netze (Internet Protocol) vorgesehen und Schicht 7 (Anwendungsschicht) gemäß OSI-Referenzmodell zugeordnet. Mittels File Transfer Protocol können Dateien von einem Server zu einem Client heruntergeladen werden, von einem Client zu einem Server hochgeladen oder Servern ausgetauscht werden. Außerdem unterstützt das File Transfer Protocol eine Durchführung von Verzeichnis- und Datei-Operationen, wie Erstellen, Auslesen, Umbenennen oder Löschen von Dateien oder Verzeichnissen.

Zur Übertragung von Steuerungs- und Nutzdaten werden entsprechend File Transfer Protocol zwei separate TCP-Verbindungen (Transmission Control Protocol) aufgebaut. Dies kann entsprechend einem aktiven Dateiübertragungsmodus ("FTP active mode") oder entsprechend einem passiven Dateiübertragungsmodus ("FTP passive mode") erfolgen. Im aktiven Dateiübertragungsmodus öffnet ein Client für eine Übertragung von Nutzdaten einen zufällig ausgewählten logischen Anschluß (Port) und übermittelt eine Angabe des Anschlusses zusammen mit einer IP-Adresse des Clients über eine Verbindung für Steuerungsdaten an einen Server. Der Server kann anhand der Angabe des durch den Client geöffneten Anschlusses eine Verbindung für Nutzdaten zum Client aufbauen und über diese Dateien an den Client übertragen. Im passiven Dateiübertragungsmodus übermittelt der Client eine Anforderung an den Server zur Öffnung eines logischen Anschlusses am Server, der für eine Übertragung von Nutzdaten verwendet werden kann. Auf diese Anforderung öffnet der Server einen logischen Anschluß und übermittelt eine Angabe des geöffneten Anschlusses an den Client. Anhand der übermittelten Angabe des am Server für eine Übertragung von Nutzdaten geöffneten Anschlusses kann der Client eine Verbindung für Nutzdaten zum Server aufbauen und Dateien mit dem Server austauschen. Der passive Dateiübertragungsmodus ist insbesondere für Anwendungsfälle vorgesehen, in denen der Server keine Verbindung für Nutzdaten zum Client aufbauen kann, beispielsweise weil der Client durch eine Firewall gegenüber einem Zugriff geschützt ist.

Aus US 2012/0233348 A1 ist ein Verfahren bekannt, bei dem eine Meldung über eine Timeout-Option an einen FTP-Server übermittelt wird. Anschließend wird ermittelt, ob die Meldung durch den FTP-Server beantwortet wird. In Abhängigkeit von einer Beantwortung der Meldung durch den FTP-Server erfolgt eine automatische Änderung eines Download-Modus. Bei einer Änderung eines Download-Modus erfolgt eine Umschaltung auf einen zuvor genutzten Download-Modus. Mittels eines Steuerungsattributs kann eine Übermittlung einer Meldung über eine Timeout-Option aktiviert bzw. deaktiviert werden. Anhand eines weiteren Steuerungsattributs wird ein anfänglicher Download-Modus eingestellt.

In CN 102420858 A ist ein Verfahren zur Übertragung von Daten in einem öffentlichen Kommunikationsnetz beschrieben, bei dem ein FTP-Client eine Registrierungsanfrage an einen FTP-Server übermittelt. Durch den FTP-Server werden von der Registrierungsanfrage umfaßte Adressinformationen ermittelt. Anschließend wird eine Antwortnachricht an den FTP-Client übermittelt. Der FTP-Client wird dann entsprechend einem am FTP-Server eingestellten Dateiübertragungsmodus konfiguriert.

CN 102148845 A offenbart ein Verfahren zur Dateiübertragung in einem Kommunikationsnetz beschrieben, bei dem ein für eine Datensitzung zwischen einem FTP-Client und einem FTP-Server verwendeter Dateiübertragungsmodus ermittelt wird. Abhängig von einem ermittelten Dateiübertragungsmodus übermittelt der FTP-Client einen PORT- oder EPRT-Steuerungsbefehl mit einer Adreß- und Portangabe bzw. einen PASV- oder EPSV-Steuerungsbefehl an den FTP-Server. Im Fall eines PASV- oder EPSV-Steuerungsbefehls übermittelt der FTP-Server eine Portangabe an den FTP-Client. Anhand der übermittelten Adreß- und Portangaben wird eine Datensitzung zwischen dem FTP-Client und dem FTP-Server aufgebaut. Dabei kann eine solche Datensitzung auch zwischen einem IPv6-basierten Kommunikationsnetz und einem IPv4-basierten Kommunikationsnetz aufgebaut werden, ohne daß eine Erweiterung eines Application Layer Gateway erforderlich ist.

Aus US 7 412 523 B2 ist ein Verfahren zur Steigerung eines Datendurchsatzes durch einen Network Gateway bekannt, bei dem eine Dateiübertragungsanforderung von einem FTP-Client an einen FTP-Server übermittelt wird, die in einem User Mode über einen Proxy des Network Gateway umgeleitet wird. Dabei kann in einem Kernel Mode eine Umleitung dynamisch unter Umgehung des Proxy erfolgen, so daß FTP-Daten direkt vom FTP-Server an den FTP-Client übermittelt werden. Hieraus resultiert eine Steigerung des Datendurchsatzes durch den Network Gateway.

In DE 198 33 969 A1 ist ein Verfahren zur Datenübermittlung von einem Teilnehmer an einem Kommunikationsendgerät in einem ersten Kommunikationsnetz über einen Netzzugangspunkt in ein zweites Kommunikationsnetz beschrieben. Dabei sind für den Teilnehmer eine erste Authentifizierungsprozedur und über einen Verbindungsknoten eine zweite Authentifizierungsprozedur vorgesehen. Für eine Zugangsüberprüfung des Teilnehmers ist jedoch keine explizite Authentifizierungsprozedur vorgesehen, sondern alle Daten, die der Teilnehmer über den Netzzugangspunkt in das zweite Kommunikationsnetz sendet, werden einer Überprüfung unterzogen.

Der vorliegenden Erfindung liegt die Aufgabe zugrunde, ein Kommunikationsgerät und ein Verfahren zur Bereitstellung von Dateien entsprechend File Transfer Protocol zwischen ersten einer Datenverarbeitungseinrichtung in einem gegen unberechtigte Zugriffe zu schützenden industriellen Kommunikationsnetz und einer zweiten Datenverarbeitungseinrichtung in einem potentiell unsicheren Kommunikationsnetz zu schaffen, das auch bei Verwendung einer das industriellen Kommunikationsnetz schützenden Netz-Firewall eine im wesentlichen uneingeschränkte Nutzung des File Transfer Protocol durch die erste Datenverarbeitungseinrichtung ermöglicht.

Diese Aufgabe wird erfindungsgemäß durch ein Kommunikationsgerät mit den in Anspruch 1 angegebenen Merkmalen und durch ein Verfahren mit den in Anspruch 8 angegebenen Merkmalen gelöst. Vorteilhafte Weiterbildungen der vorliegenden Erfindung sind in den abhängigen Ansprüchen angegeben.

Das erfindungsgemäße Kommunikationsgerät ist zwischen einer einen Datenzugriff entsprechend File Transfer Protocol anfordernden ersten Datenverarbeitungseinrichtung und einer Daten entsprechend File Transfer Protocol bereitstellenden zweiten Datenverarbeitungseinrichtung anschließbar. Als einen Bestandteil umfaßt das erfindungsgemäße Kommunikationsgerät eine Überwachungseinheit, die für ein Auslesen von Steuerungsbefehlen ausgestaltet und eingerichtet ist, die entsprechend File Transfer Protocol formatiert und von der ersten Datenverarbeitungseinrichtung an die zweite Datenverarbeitungseinrichtung gerichtet sind. Zusätzlich ist eine Steuerungseinheit vorgesehen, die für ein Ersetzen von ausgelesenen Steuerungsbefehlen, die für einen aktiven Dateiübertragungsmodus vorgesehen sind, durch Steuerungsbefehle für einen passiven Dateiübertragungsmodus ausgestaltet und eingerichtet ist. Vorzugsweise entspricht der aktive Dateiübertragungsmodus dem "FTP active mode", während der passive Dateiübertragungsmodus dem "FTP passive mode" entspricht. Durch die Steuerungseinheit ist eine Server-Rechnereinheit gesteuert, die für einen Aufbau einer Datenverbindung in einem aktiven Dateiübertragungsmodus entsprechend File Transfer Protocol zur ersten Datenverarbeitungseinrichtung ausgestaltet und eingerichtet ist. Darüber hinaus ist durch die Steuerungseinheit eine Client-Rechnereinheit gesteuert, die für einen Aufbau einer Datenverbindung in einem passiven Dateiübertragungsmodus entsprechend File Transfer Protocol zur zweiten Datenverarbeitungseinrichtung ausgestaltet und eingerichtet ist. Außerdem ist eine durch die Steuerungseinheit gesteuerte Datenverbindung zwischen der Server-Rechnereinheit und der Client-Rechnereinheit vorgesehen, die für eine Datenübertragung von der zweiten Datenverarbeitungseinrichtung an die erste Datenverarbeitungseinrichtung ausgestaltet und eingerichtet ist. Auf diese Weise kann die erste Datenverarbeitungseinrichtung auch bei Verwendung einer grundsätzlich für eine Verwendung des File Transfer Protocol kritischen Kommunikationsnetz - Firewall im aktiven Dateiübertragungsmodus betrieben werden. Vorteilhafterweise kann das erfindungsgemäße Kommunikationsgerät als Modul oder Teilkomponente einer Kommunikationsnetz-Firewall ausgestaltet sein.

Entsprechend einer vorteilhaften Weiterbildung des erfindungsgemäßen Kommunikationsgeräts ist die Steuerungseinheit für ein Weiterleiten von ausgelesenen Steuerungsbefehlen und -parametern, die für einen aktiven Dateiübertragungsmodus vorgesehen sind, an die Server-Rechnereinheit ausgestaltet und eingerichtet. Dabei ist die Server-Rechnereinheit für einen Aufbau der Datenverbindung zur ersten Datenverarbeitungseinrichtung entsprechend von der Steuerungseinheit weitergeleiteter Steuerungsbefehle und -parameter ausgestaltet und eingerichtet. Entsprechend einer weiteren Ausgestaltung der vorliegenden Erfindung ist die Steuerungseinheit für ein Weiterleiten von ersetzten Steuerungsbefehlen und -parametern für einen passiven Dateiübertragungsmodus an die zweite Datenverarbeitungseinrichtung ausgestaltet und eingerichtet. Dabei ist die Client-Rechnereinheit für einen Aufbau der Datenverbindung zur zweiten Datenverarbeitungseinrichtung entsprechend durch die zweite Datenverarbeitungseinrichtung als Antwort auf die ersetzten Steuerungsbefehle und -parameter vorgegebenen Zugriffsparametern ausgestaltet und eingerichtet. Durch obige Ausgestaltungen der vorliegenden Erfindung ist eine zuverlässige und koordinierte Weiterleitung von Steuerungsbefehlen und -parametern gewährleistet.

Vorzugsweise ist die Datenverbindung zwischen der Server-Rechnereinheit und der Client-Rechnereinheit für eine Synchronisierung durch die zweite Datenverarbeitungseinrichtung an die Client-Rechnereinheit übertragener Daten mit durch die Server-Rechnereinheit an die erste Datenverarbeitungseinrichtung zu übertragenden Daten ausgestaltet und eingerichtet. Dies ermöglicht auch dann einen zuverlässigen Datenaustausch, wenn die erste Datenverarbeitungseinrichtung und die zweite Datenverarbeitungseinrichtung in einem unterschiedlichen Dateiübertragungsmodus betrieben werden.

Darüber hinaus ist die Steuerungseinheit entsprechend einer bevorzugten Weiterbildung des erfindungsgemäßen Kommunikationsgeräts für ein Identifizieren von Steuerungsbefehlen, für die entsprechend einem aktiven Dateiübertragungsmodus Statusrückmeldungen der zweiten Datenverarbeitungseinrichtung vorgesehen sind, für ein Generieren vorgesehener Statusrückmeldungen und für ein Weiterleiten generierter Statusrückmeldungen an die erste Datenverarbeitungseinrichtung ausgestaltet und eingerichtet. Damit können durch eine Umsetzung des Dateiübertragungsmodus bedingte negative Auswirkungen auf einen Betrieb der ersten Datenverarbeitungseinrichtung und der zweiten Datenverarbeitungseinrichtung wirksam vermieden werden.

Entsprechend einer weiteren vorteilhaften Ausgestaltung der vorliegenden Erfindung ist die Steuerungseinheit für ein Auftrennen von entsprechend Transmission Control Protocol aufgebauten Datenverbindungen zwischen der ersten Datenverarbeitungseinrichtung und der zweiten Datenverarbeitungseinrichtung ausgestaltet und eingerichtet. Auf diese Weise können umgesetzte Steuerungsbefehle oder Statusrückmeldungen in Datenverbindungen zwischen der Client-Rechnereinheit und der Server-Rechnereinheit eingefügt werden, ohne daß sich hierdurch nachteilige Rückwirkungen die Client-Rechnereinheit bzw. die Server-Rechnereinheit ergeben. Das erfindungsgemäße Kommunikationsgerät erscheint somit sowohl für die erste Datenverarbeitungseinrichtung als auch für die zweite Datenverarbeitungseinrichtung in kommunikationstechnischem Sinn transparent.

Entsprechend dem erfindungsgemäßen Verfahren zur Bereitstellung von Daten, insbesondere Dateien, in einem industriellen Kommunikationsnetz wird zunächst durch eine erste Datenverarbeitungseinrichtung ein Datenzugriff in einem aktiven Dateiübertragungsmodus entsprechend File Transfer Protocol angefordert. Durch eine zweite Datenverarbeitungseinrichtung werden Daten in einem passiven Dateiübertragungsmodus entsprechend File Transfer Protocol bereitgestellt. Außerdem werden eine Überwachungseinheit Steuerungsbefehle ausgelesen, die entsprechend File Transfer Protocol formatiert und von der ersten Datenverarbeitungseinrichtung an die zweite Datenverarbeitungseinrichtung gerichtet sind. Des weiteren werden durch eine Steuerungseinheit ausgelesene Steuerungsbefehle, die für einen aktiven Dateiübertragungsmodus vorgesehen sind, durch Steuerungsbefehle für einen passiven Dateiübertragungsmodus ersetzt. Eine durch die Steuerungseinheit gesteuerte Server-Rechnereinheit baut eine Datenverbindung in einem aktiven Dateiübertragungsmodus entsprechend File Transfer Protocol zur ersten Datenverarbeitungseinrichtung auf. Demgegenüber baut eine durch die Steuerungseinheit gesteuerte Client-Rechnereinheit eine Datenverbindung in einem passiven Dateiübertragungsmodus entsprechend File Transfer Protocol zur zweiten Datenverarbeitungseinrichtung auf. Darüber hinaus werden über eine durch die Steuerungseinheit gesteuerte Datenverbindung zwischen der Server-Rechnereinheit und der Client-Rechnereinheit Daten von der zweiten Datenverarbeitungseinrichtung an die erste Datenverarbeitungseinrichtung übertragen. Damit ermöglicht das erfindungsgemäße Verfahren einen Betrieb der ersten Datenverarbeitungseinrichtung und der zweiten Datenverarbeitungseinrichtung in einem unterschiedlichen Dateiübertragungsmodus. Dies ist insbesondere bei Verwendung einer zwischen der ersten Datenverarbeitungseinrichtung und der zweiten Datenverarbeitungseinrichtung im industriellen Kommunikationsnetz angeordneten Kommunikationsnetz-Firewall ein Vorteil.

Die Steuerungseinheit leitet entsprechend einer bevorzugten Weiterbildung des erfindungsgemäßen Verfahrens ausgelesene Steuerungsbefehle und -parameter, die für einen aktiven Dateiübertragungsmodus vorgesehen sind, an die Server-Rechnereinheit weiter. Dabei baut die Server-Rechnereinheit die Datenverbindung zur ersten Datenverarbeitungseinrichtung entsprechend von der Steuerungseinheit weitergeleiteter Steuerungsbefehle und -parameter auf. Entsprechend einer weiteren Ausgestaltung der vorliegenden Erfindung leitet die Steuerungseinheit ersetzte Steuerungsbefehle und -parameter für einen passiven Dateiübertragungsmodus an die zweite Datenverarbeitungseinrichtung weiter. Dabei baut die Client-Rechnereinheit die Datenverbindung zur zweiten Datenverarbeitungseinrichtung entsprechend durch die zweite Datenverarbeitungseinrichtung als Antwort auf die ersetzten Steuerungsbefehle und -parameter vorgegebenen Zugriffsparametern auf. Auf diese Weise werden Steuerungsbefehle und -parameter zuverlässig und koordiniert weitergeleitet.

Entsprechend einer weiteren vorteilhaften Ausgestaltung des erfindungsgemäßen Verfahrens werden über die Datenverbindung zwischen der Server-Rechnereinheit und der Client-Rechnereinheit durch die zweite Datenverarbeitungseinrichtung an die Client-Rechnereinheit übertragene Daten mit durch die Server-Rechnereinheit an die erste Datenverarbeitungseinrichtung zu übertragenden Daten synchronisiert. Somit können Daten auch bei einem unterschiedlichen Dateiübertragungsmodus in der ersten Datenverarbeitungseinrichtung und der zweiten Datenverarbeitungseinrichtung entsprechend File Transfer Protocol übertragen werden.

Vorzugsweise werden durch die Steuerungseinheit Steuerungsbefehle, für die entsprechend einem aktiven Dateiübertragungsmodus Statusrückmeldungen der zweiten Datenverarbeitungseinrichtung vorgesehen sind, identifiziert, vorgesehene Statusrückmeldungen generiert und generierte Statusrückmeldungen an die erste Datenverarbeitungseinrichtung weitergeleitet. Darüber hinaus kann die Steuerungseinheit entsprechend Transmission Control Protocol aufgebaute Datenverbindungen zwischen der ersten Datenverarbeitungseinrichtung und der zweiten Datenverarbeitungseinrichtung auftrennen. Dadurch wirkt sich eine Umsetzung des Dateiübertragungsmodus nicht negativ auf einen Betrieb der ersten Datenverarbeitungseinrichtung und der zweiten Datenverarbeitungseinrichtung aus.

Die vorliegende Erfindung wird nachfolgend an einem Ausführungsbeispiel anhand der Zeichnung näher erläutert. Es zeigt
- Figur 1: eine schematische Darstellung eines Kommunikationsnetzes mit einem FTP-Server, einem FTP-Client, einer Firewall und einem FTP-Übertragungsmodus-Umsetzer,
- Figur 2: eine Detaildarstellung einer Steuerungseinheit des in Figur 1 dargestellten FTP-Übertragungsmodus-Umsetzers.

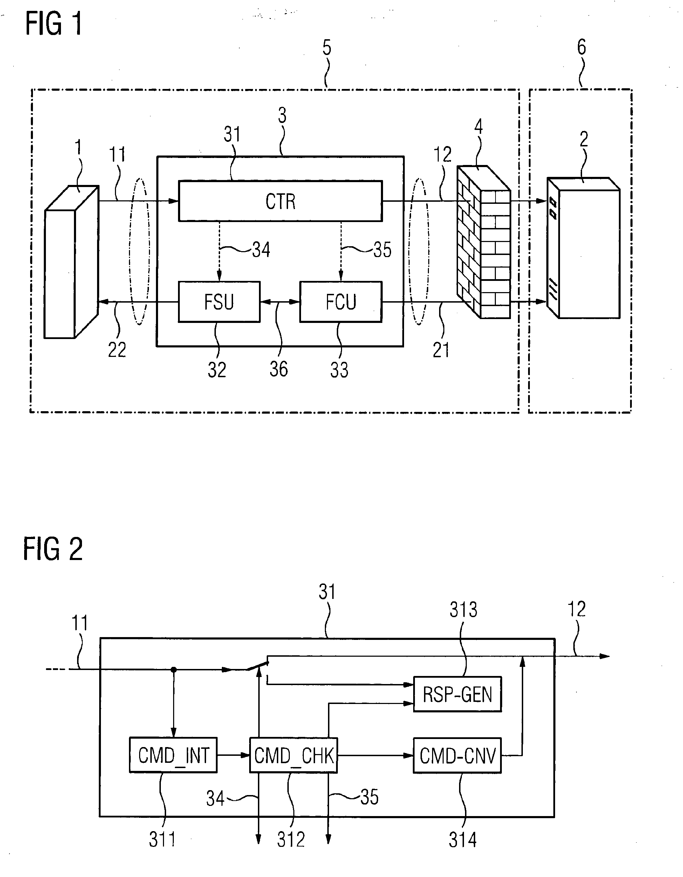

Das in Figur 1 dargestellte Kommunikationsnetz umfaßt einen FTP-Client 1 als erste Datenverarbeitungseinrichtung, durch die ein Dateizugriff entsprechend File Transfer Protocol (FTP) angefordert wird, und einen FTP-Server 2 als zweite Datenverarbeitungseinrichtung, durch die Dateien entsprechend File Transfer Protocol bereitgestellt werden. Topologisch zwischen dem FTP-Client 1 und dem FTP-Server 2 sind innerhalb des industriellen Kommunikationsnetzes ein FTP-Übertragungsmodus-Umsetzer 3 und eine Firewall 4 als Kommunikationsnetz-Sicherungssystem angeordnet. Dabei kann der FTP-Übertragungsmodus-Umsetzer 3 als diskretes Kommunikationsgerät oder als Modul bzw. Teilkomponente der Firewall 4 ausgestaltet sein. Der FTP-Client 1 und der FTP-Übertragungsmodus-Umsetzer 3 sind einem durch die Firewall 4 gegen Zugriff aus anderen Teilnetzen gesicherten Teilnetz 5 zugeordnet, während der FTP-Server 2 einem ungesicherten Teilnetz 6 zugeordnet ist.

Für eine FTP-Dateiübertragung sind zwischen dem FTP-Client 1 und dem FTP-Server 2 entsprechend Transmission Control Protocol (TCP) eine Steuerungsdatenverbindung 11-12 und eine separate Nutzdatenverbindung 21-22 aufgebaut. Diese Datenverbindungen 11-12, 21-22 können durch eine Steuerungseinheit 31 des FTP-Übertragungsmodus-Umsetzers 3, die als TCP Connection Injector agiert, am FTP-Übertragungsmodus-Umsetzer 3 aufgetrennt werden. Alternativ dazu kann der FTP-Übertragungsmodus-Umsetzer 3 im kommunikationstechnischen Sinn transparent betrieben werden, so daß eine Hinzufügung des FTP-Übertragungsmodus-Umsetzers 3 keine Adreßstrukturänderung erfordert.

In Figur 2 ist die Steuerungseinheit 31 des FTP-Übertragungsmodus-Umsetzers 3 detaillierter dargestellt. Die Steuerungseinheit 31 umfaßt eine Überwachungseinheit 311, durch die über die Steuerungsdatenverbindung 11-12 an den FTP-Server 2 übermittelte Steuerungsbefehle des FTP-Clients 1 ausgelesen werden, die entsprechend File Transfer Protocol formatiert sind. Darüber hinaus ist die Steuerungseinheit 31 für ein Ersetzen von ausgelesenen Steuerungsbefehlen, die für einen aktiven Dateiübertragungsmodus ("FTP active mode") vorgesehen sind, durch Steuerungsbefehle für einen passiven Dateiübertragungsmodus ("FTP passive mode") ausgestaltet und eingerichtet. Hierzu umfaßt die Steuerungseinheit 31 eine Überprüfungseinheit 312 zur Identifikation umzusetzender Steuerungsbefehle und eine Umsetzereinheit 314, die für den aktiven Dateiübertragungsmodus vorgesehene Steuerungsbefehle durch Steuerungsbefehle für den passiven Dateiübertragungsmodus ersetzt. Die Überprüfungseinheit 312 weist jeweils eine Steuerungssignalverbindung 34, 35 zu einer Server-Rechnereinheit 32 und zu einer Client-Rechnereinheit 33 des FTP-Übertragungsmodus-Umsetzers 3 auf (siehe auch Figur 1). Durch die Steuerungseinheit 31 werden außerdem Steuerungsbefehle identifiziert, die entsprechend dem aktiven Dateiübertragungsmodus eine Statusrückmeldung des FTP-Servers 2 erfordern bzw. erfordern würden, und erforderliche Statusrückmeldungen generiert sowie an den FTP-Client 1 weitergeleitet. Hierzu umfaßt die Steuerungseinheit 31 einen mit der Überprüfungseinheit 312 verbundenen Generator 313 für Statusrückmeldungen.

Die Server-Rechnereinheit 32 des FTP-Übertragungsmodus-Umsetzers 3 ist durch die Steuerungseinheit 31 gesteuert und für einen Aufbau einer Nutzdatenverbindung 22 zum FTP-Client 1 im aktiven Dateiübertragungsmodus entsprechend File Transfer Protocol ausgestaltet und eingerichtet. In analoger Weise ist die Client-Rechnereinheit 33 durch die Steuerungseinheit 31 gesteuert und für einen Aufbau einer Nutzdatenverbindung 21 zum FTP-Server 2 im passiven Dateiübertragungsmodus entsprechend File Transfer Protocol ausgestaltet und eingerichtet. Die Datenverbindungen 11, 22 zwischen dem FTP-Client 1 und dem FTP-Übertragungsmodus-Umsetzer 3 werden insgesamt entsprechend dem aktiven Dateiübertragungsmodus aufgebaut und betrieben, während die Datenverbindungen 12, 21 zwischen dem FTP-Server 2 und dem FTP-Übertragungsmodus-Umsetzer 3 insgesamt entsprechend dem passiven Dateiübertragungsmodus aufgebaut und betrieben werden.

Zwischen der Client-Rechnereinheit 32 und der Server-Rechnereinheit 33 des FTP-Übertragungsmodus-Umsetzers 3 besteht eine durch die Steuerungseinheit 31 gesteuerte Nutzdatenverbindung 36, die für eine Dateiübertragung von FTP-Server 2 an den FTP-Client 1 ausgestaltet und eingerichtet ist. Über die Nutzdatenverbindung 36 zwischen der Server-Rechnereinheit 32 und der Client-Rechnereinheit 33 werden durch den FTP-Server 2 an die Client-Rechnereinheit 33 übertragene Dateien mit durch die Server-Rechnereinheit 32 an den FTP-Client 1 zu übertragenden Dateien synchronisiert.

Die Steuerungseinheit 31 leitet außerdem durch die Überwachungseinheit 311 ausgelesene Steuerungsbefehle und -parameter, die für den aktiven Dateiübertragungsmodus vorgesehen sind, an die Server-Rechnereinheit 32 des FTP-Übertragungsmodus-Umsetzers 3 weiter. Entsprechend den von der Steuerungseinheit 31 weitergeleiteten Steuerungsbefehlen und -parametern baut die Server-Rechnereinheit 32 die Nutzdatenverbindung 22 zum FTP-Client 1 auf. In analoger Weise leitet die Steuerungseinheit 31 ersetzte Steuerungsbefehle und -parameter für den passiven Dateiübertragungsmodus an den FTP-Server 2 weiter. Entsprechend durch den FTP-Server 2 als Antwort auf die durch die Umsetzereinheit 314 ersetzten Steuerungsbefehle und -parameter vorgegebenen Zugriffsparametern baut die Client-Rechnereinheit 33 des FTP-Übertragungsmodus-Umsetzers 3 die Nutzdatenverbindung 21 zum FTP-Server 2 auf.

Durch die Umsetzereinheit 314 werden die Steuerungsbefehle ersetzt, die für einen Dateiübertragungsmodus speziell vorgesehen sind und diesen kennzeichnen. Dabei handelt es sich insbesondere um die Steuerungsbefehle PORT und MODE. Befindet sich der FTP-Client 1 im aktiven Dateiübertragungsmodus und sendet über die Steuerungsdatenverbindung 11 den Steuerungsbefehl "PORT", ergänzt durch die Steuerungsparameter "192,168,150,80,14,178", würde der FTP-Server 2 im aktiven Dateiübertragungsmodus hierauf einen Port für eine Nutzdatenverbindung zu Port 3762 (14*256 + 178) an FTP-Client 1 mit IP-Adresse 192.168.150.80 öffnen. Dieser Steuerungsbefehl einschließlich Steuerungsparameter wird entsprechend dem vorliegenden Ausführungsbeispiel durch den FTP-Übertragungsmodus-Umsetzer 3 abgefangen. Der FTP-Übertragungsmodus-Umsetzer 3 ersetzt dabei den Steuerungsbefehl "PORT" durch den Steuerungsbefehl "PASV", der über die Steuerungsdatenverbindung 12 und die Firewall 4 an den FTP-Server 2 übermittelt wird. Durch den Steuerungsbefehl "PASV" wird der FTP-Server 2 dazu veranlaßt, im passiven Dateiübertragungsmodus auf einen Verbindungsaufbau durch ein anderes Kommunikationsgerät zu warten. Als Antwort auf den Steuerungsbefehl "PASV" sendet der FTP-Server 2 folgende Statusrückmeldung an den FTP-Übertragungsmodus-Umsetzer 3: "227 Entering Passive Mode (192,168,150,90,195,149)". Diese für den passiven Dateiübertragungsmodus charakteristische Statusrückmeldung wird jedoch nicht durch den FTP-Übertragungsmodus-Umsetzer 3 an den FTP-Client 1 weitergeleitet, da sich dieser im aktiven Dateiübertragungsmodus befindet und auf eine Statusrückmeldung zum Steuerungsbefehl "PORT" wartet. Vielmehr wird o.g. Statusrückmeldung durch die Überwachungseinheit 312 des FTP-Übertragungsmodus-Umsetzers 3 auf Plausibilität überprüft. Außerdem entnimmt der FTP-Übertragungsmodus-Umsetzer 3 o.g. Statusrückmeldung, daß der FTP-Server unter IP-Adresse 192.168.150.90 an Port 50069 (195*256+149) auf eine eingehende Nutzdatenverbindung wartet.

Anhand des durch den FTP-Client 1 gesendeten Steuerungsbefehls "PORT", ergänzt durch die Steuerungsparameter "192,168,150,80,14,178" wird die Server-Rechnereinheit 32 des FTP-Übertragungsmodus-Umsetzers 3 durch die Steuerungseinheit 31 derart gesteuert, daß die Server-Rechnereinheit 32 eine Nutzdatenverbindung 22 zum FTP-Client 1 unter IP-Adresse 192.168.150.80 an Port 3762 aufbaut. Aufgrund o.g. Statusrückmeldung des FTP-Servers 2 wird die Client-Rechnereinheit 33 des FTP-Übertragungsmodus-Umsetzers 3 durch die Steuerungseinheit 31 derart gesteuert, daß die Client-Rechnereinheit 33 eine Nutzdatenverbindung 21 zum FTP-Server 1 unter IP-Adresse 192.168.150.90 an Port 50069 aufbaut. Da ein Aufbau der Nutzdatenverbindung 21 zwischen der Client-Rechnereinheit 33 und dem FTP-Server 2 durch die Client-Rechnereinheit 33, nicht aber durch den FTP-Server 2 initiiert wird, erfolgt keine Blockierung des Aufbaus der Nutzdatenverbindung 21 durch die Firewall 4, da die Firewall 4 im vorliegenden Ausführungsbeispiel nur für einen Schutz des gesicherten Teilnetzes 5 gegen Zugriff aus anderen Teilnetzen vorgesehen ist und aus dem gesicherten Teilnetz 5 gehenden Datenverkehr nicht filtert.

Die Anwendung der vorliegenden Erfindung ist nicht auf das vorliegende Ausführungsbeispiel beschränkt.

## Patentansprüche

1. Kommunikationsgerät für ein industrielles Kommunikationsnetz, das zwischen einer einen Datenzugriff entsprechend File Transfer Protocol anfordernden ersten Datenverarbeitungseinrichtung und einer Daten entsprechend File Transfer Protocol bereitstellenden zweiten Datenverarbeitungseinrichtung anschließbar ist, mit
- einer Überwachungseinheit, die für ein Auslesen von Steuerungsbefehlen ausgestaltet und eingerichtet ist, die entsprechend File Transfer Protocol formatiert und von der ersten Datenverarbeitungseinrichtung an die zweite Datenverarbeitungseinrichtung gerichtet sind,
- einer Steuerungseinheit, die für ein Ersetzen von ausgelesenen Steuerungsbefehlen, die für einen aktiven Dateiübertragungsmodus vorgesehen sind, durch Steuerungsbefehle für einen passiven Dateiübertragungsmodus ausgestaltet und eingerichtet ist,
- einer durch die Steuerungseinheit gesteuerten Server-Rechnereinheit, die für einen Aufbau einer Datenverbindung in einem aktiven Dateiübertragungsmodus entsprechend File Transfer Protocol zur ersten Datenverarbeitungseinrichtung ausgestaltet und eingerichtet ist,
- einer durch die Steuerungseinheit gesteuerten Client-Rechnereinheit, die für einen Aufbau einer Datenverbindung in einem passiven Dateiübertragungsmodus entsprechend File Transfer Protocol zur zweiten Datenverarbeitungseinrichtung ausgestaltet und eingerichtet ist,
- einer durch die Steuerungseinheit gesteuerten Datenverbindung zwischen der Server-Rechnereinheit und der Client-Rechnereinheit, die für eine Datenübertragung von der zweiten Datenverarbeitungseinrichtung an die erste Datenverarbeitungseinrichtung ausgestaltet und eingerichtet ist.

2. Kommunikationsgerät nach Anspruch 1,
bei dem die Steuerungseinheit für ein Weiterleiten von ausgelesenen Steuerungsbefehlen und -parametern, die für einen aktiven Dateiübertragungsmodus vorgesehen sind, an die Server-Rechnereinheit ausgestaltet und eingerichtet ist, und bei dem die Server-Rechnereinheit für einen Aufbau der Datenverbindung zur ersten Datenverarbeitungseinrichtung entsprechend von der Steuerungseinheit weitergeleiteter Steuerungsbefehle und -parameter ausgestaltet und eingerichtet ist.

3. Kommunikationsgerät nach einem der Ansprüche 1 oder 2,
bei dem die Steuerungseinheit für ein Weiterleiten von ersetzten Steuerungsbefehlen und -parametern für einen passiven Dateiübertragungsmodus an die zweite Datenverarbeitungseinrichtung ausgestaltet und eingerichtet ist, und bei dem die Client-Rechnereinheit für einen Aufbau der Datenverbindung zur zweiten Datenverarbeitungseinrichtung entsprechend durch die zweite Datenverarbeitungseinrichtung als Antwort auf die ersetzten Steuerungsbefehle und -parameter vorgegebenen Zugriffsparametern ausgestaltet und eingerichtet ist.

4. Kommunikationsgerät nach einem der Ansprüche 1 bis 3,
bei dem die Datenverbindung zwischen der Server-Rechnereinheit und der Client-Rechnereinheit für eine Synchronisierung durch die zweite Datenverarbeitungseinrichtung an die Client-Rechnereinheit übertragener Daten mit durch die Server-Rechnereinheit an die erste Datenverarbeitungseinrichtung zu übertragenden Daten ausgestaltet und eingerichtet ist.

5. Kommunikationsgerät nach einem der Ansprüche 1 bis 4,
bei dem die Steuerungseinheit für ein Identifizieren von Steuerungsbefehlen, für die entsprechend einem aktiven Dateiübertragungsmodus Statusrückmeldungen der zweiten Datenverarbeitungseinrichtung vorgesehen sind, für ein Generieren vorgesehener Statusrückmeldungen und für ein Weiterleiten generierter Statusrückmeldungen an die erste Datenverarbeitungseinrichtung ausgestaltet und eingerichtet ist.

6. Kommunikationsgerät nach einem der Ansprüche 1 bis 5,
bei dem die Steuerungseinheit für ein Auftrennen von entsprechend Transmission Control Protocol aufgebauten Datenverbindungen zwischen der ersten Datenverarbeitungseinrichtung und der zweiten Datenverarbeitungseinrichtung ausgestaltet und eingerichtet ist.

7. Kommunikationsgerät nach einem der Ansprüche 1 bis 6,
bei dem das Kommunikationsgerät als Modul oder Teilkomponente einer Kommunikationsnetz-Firewall ausgestaltet ist.

8. Verfahren zur Bereitstellung von Daten, insbesondere Dateien, in einem industriellen Kommunikationsnetz mittels File Transfer Protocol, bei dem
- durch eine erste Datenverarbeitungseinrichtung ein Datenzugriff in einem aktiven Dateiübertragungsmodus entsprechend File Transfer Protocol angefordert wird,
- durch eine zweite Datenverarbeitungseinrichtung Daten in einem passiven Dateiübertragungsmodus entsprechend File Transfer Protocol bereitgestellt werden,
- durch eine Überwachungseinheit Steuerungsbefehle ausgelesen werden, die entsprechend File Transfer Protocol formatiert und von der ersten Datenverarbeitungseinrichtung an die zweite Datenverarbeitungseinrichtung gerichtet sind,
- durch eine Steuerungseinheit ausgelesene Steuerungsbefehle, die für einen aktiven Dateiübertragungsmodus vorgesehen sind, durch Steuerungsbefehle für einen passiven Dateiübertragungsmodus ersetzt werden,
- eine durch die Steuerungseinheit gesteuerte Server-Rechnereinheit eine Datenverbindung in einem aktiven Dateiübertragungsmodus entsprechend File Transfer Protocol zur ersten Datenverarbeitungseinrichtung aufbaut,
- eine durch die Steuerungseinheit gesteuerte Client-Rechnereinheit eine Datenverbindung in einem passiven Dateiübertragungsmodus entsprechend File Transfer Protocol zur zweiten Datenverarbeitungseinrichtung aufbaut,
- über eine durch die Steuerungseinheit gesteuerte Datenverbindung zwischen der Server-Rechnereinheit und der Client-Rechnereinheit Daten von der zweiten Datenverarbeitungseinrichtung an die erste Datenverarbeitungseinrichtung übertragen werden.

9. Verfahren nach Anspruch 8,
bei dem die Steuerungseinheit ausgelesene Steuerungsbefehle und -parameter, die für einen aktiven Dateiübertragungsmodus vorgesehen sind, an die Server-Rechnereinheit weiterleitet, und bei dem die Server-Rechnereinheit die Datenverbindung zur ersten Datenverarbeitungseinrichtung entsprechend von der Steuerungseinheit weitergeleiteter Steuerungsbefehle und -parameter aufbaut.

10. Verfahren nach einem der Ansprüche 8 oder 9,
bei dem die Steuerungseinheit ersetzte Steuerungsbefehle und -parameter für einen passiven Dateiübertragungsmodus an die zweite Datenverarbeitungseinrichtung weiterleitet, und bei dem die Client-Rechnereinheit die Datenverbindung zur zweiten Datenverarbeitungseinrichtung entsprechend durch die zweite Datenverarbeitungseinrichtung als Antwort auf die ersetzten Steuerungsbefehle und -parameter vorgegebenen Zugriffsparametern aufbaut.

11. Verfahren nach einem der Ansprüche 8 bis 10,
bei dem über die Datenverbindung zwischen der Server-Rechnereinheit und der Client-Rechnereinheit durch die zweite Datenverarbeitungseinrichtung an die Client-Rechnereinheit übertragene Daten mit durch die Server-Rechnereinheit an die erste Datenverarbeitungseinrichtung zu übertragenden Daten synchronisiert werden.

12. Verfahren nach einem der Ansprüche 8 bis 11,
bei dem durch die Steuerungseinheit Steuerungsbefehle, für die entsprechend einem aktiven Dateiübertragungsmodus Statusrückmeldungen der zweiten Datenverarbeitungseinrichtung vorgesehen sind, identifiziert, vorgesehene Statusrückmeldungen generiert und generierte Statusrückmeldungen an die erste Datenverarbeitungseinrichtung weitergeleitet werden.

13. Verfahren nach einem der Ansprüche 8 bis 12,
bei dem die Steuerungseinheit entsprechend Transmission Control Protocol aufgebaute Datenverbindungen zwischen der ersten Datenverarbeitungseinrichtung und der zweiten Datenverarbeitungseinrichtung auftrennt.
